# EUROPÄISCHE PATENTANMELDUNG

(11) **EP 2 196 684 A1**
(43) Veröffentlichungstag der Anmeldung: **16.06.2010**
(21) Anmeldenummer: 09015165.5
(22) Anmeldetag: 08.12.2009
(51) Int. Cl.: F16B 2/22, F16L 3/12, F16L 3/24, F16L 55/035

(54) **Halterung für Elemente der Wasser- oder Heizungsinstallation**

(30) Priorität: 10.12.2008 DE 202008016329 U
(71) Anmelder: Watts Industries Deutschland Gesellschaft mit beschränkter Haftung, 76829 Landau (DE)
(72) Erfinder: Spiess, Fritz, Unterlunkhofen (CH); Burkhart, Michael, 76891 Bruchweiler (DE)
(74) Vertreter: Patentanwälte Möll, Bitterich & Dr. Keller

(57) **Zusammenfassung**

Die Erfindung betrifft eine Halterung für Elemente (2, 3, 4) der Wasser- oder Heizungsinstallation, umfassend einen Basiskörper (1, 1') und einen Haltebügel (10, 20), der eines der Elemente (3, 4) übergreift und am Basiskörper (1, 1') lösbar befestigt. Basiskörper (1, 1') und Haltebügel (10, 20) sind zu den Elementen (2, 3, 4) passend geformt. Der Haltebügel (10, 20) ist U-förmig, besitzt zwei Schenkel (11, 21) und besteht aus einem elastischen, schalldämpfenden Kunststoff. Die Enden (12, 22) der Schenkel (11, 21) sind V-förmig rückwärts gebogen und an der Außenseite der Schenkelenden (12, 22) sind erste Rastnasen (13, 23) angeformt. Der Basiskörper (1, 1') besitzt Öffnungen (8), passend zu den Schenkeln (11,12; 21, 22). An der Innenwand der Öffnungen (8) sind zweite Rastnasen (9) angeformt, die mit den ersten Rastnasen (13, 23) kooperieren. Die Enden (12, 22) der Schenkel (11, 21) sind für Handbetätigung ausgebildet.

## Beschreibung

Die Erfindung betrifft Halterungen für Elemente der Wasser- oder Heizungsinstallation gemäß dem Oberbegriff des Anspruchs 1.

Aus der DE 199 12 617 A1 ist ein Wandhalter für Installationselemente, insbesondere für Heizkreisverteiler, bekannt. Vorgesehen ist ein Grundkörper von länglicher Erstreckung mit Wandauflageflächen, mit Wandmontagebohrungen und mit Aufnahmen für beabstandet anbringbare Installationselemente. Jedem Platz für ein Installationselement sind dieses haltende Wandhalterteile zugeordnet. Die Wandhalterteile sind formpassend gestaltet und enthalten Arme. Ferner ist jedem Aufnahmebereich ein Bügelelement zugeordnet. Zwischen Bügelelement und Grundkörper und Element-Auflage ist ein bedarfsweise einsetzbarer Anpassungskeil vorgesehen. Die Anlagenstützflächen und die Befestigungsflächen von Grundkörper, Bügelelement und Anpassungskeil sind mit austauschbar passenden Berührungs- und Stützflächen gestaltet. Alle Elemente bestehen aus Kunststoff. Ihre Befestigung erfolgt mit Schrauben.

Weiterhin bekannt sind handelsüblich Halterungen aus Metall. Auch hier erfolgt die Befestigung der Einzelteile üblicherweise mittels Schrauben.

Halterungen aus Metall sind schwer. Schraubverbindungen sind zeitaufwändig. Es ist deshalb üblich, Halterungen und Elemente im Herstellerwerk oder in der Werkstatt des Installateurs vorzumontieren und im vormontierten Zustand zur Einbaustelle zu transportieren. Der Transport derart vormontierter Elemente kann umständlich sein, insbesondere wenn es sich um längere und verzweigte Rohre und dergleichen handelt. Dieser Zustand ist unbefriedigend.

Der vorliegenden Erfindung liegt die Aufgabe zugrunde, gattungsgemäße Halterungen anzugeben, die ein geringes Gewicht haben und sich auch auf der Baustelle einfach und schnell montieren lassen.

Diese Aufgabe wird gelöst durch Halterungen mit den Merkmalen des Anspruchs 1. Ausgestaltungen und Weiterbildungen sind Gegenstand der Unteransprüche.

Der wesentliche Vorteil der erfindungsgemäßen Halterung beruht auf dem völligen Verzicht von Schraubverbindungen, die durch Rastverbindungen ersetzt werden. Rastverbindungen sind sehr viel schneller hergestellt als Schraubverbindungen. Da die Schenkelenden der erfindungsgemäßen Haltebügel V-förmig zurückgebogen sind, so dass sie mit den Schenkelenden selbst fast parallel verlaufen, sind sie von der Montageseite aus per Hand zu betätigen; der Haltebügel kann daher auch ohne Werkzeug schnell und bequem wieder gelöst werden, wenn das betreffende Element justiert oder ausgewechselt werden soll.

Ein weiterer Vorteil beruht auf dem gegenüber Metall geringeren Gewicht von Kunststoff. Des Weiteren ist der verwendete Kunststoff sowohl elastisch als auch schalldämpfend, so dass etwaige Strömungsgeräusche eines strömenden Fluids nicht oder nur deutlich gedämpft übertragen werden.

Da die Montage einfach und ohne Werkzeug durchgeführt werden kann, kann sie jetzt direkt an der Baustelle erfolgen. Infolgedessen können die dazu benötigten Einzelteile lose zur Baustelle transportiert werden. Dadurch wird die Verpackung kompakter und leichter als bisher.

Es versteht sich, dass eine kompaktere und leichtere Verpackung auch weniger Lager-und Transportplatz und -kosten verursacht.

Vorteilhafterweise besitzt der Basiskörper auch Befestigungsöffnungen, und zwar sowohl für die Haltebügel als auch für eine Wand- oder Deckenmontage.

Gemäß einer vorteilhaften Weiterbildung der Erfindung ist zwischen dem Basiskörper und einem der gehaltenen Elemente ein elastischer Sattelkörper vorgesehen. Ein solcher Sattelkörper kann etwaige Abmessungstoleranzen ausgleichen. Außerdem erhöht er den Abstand zwischen Basiskörper und dem gehaltenen Element.

Vorteilhafterweise besteht der Sattelkörper aus einem schalldämpfenden Material, z.B. Gummi. Dadurch wird die Übertragung von Strömungsrauschen weiter verringert.

Vorteilhafterweise ist die eine Seite des Sattelkörpers eben, die andere konkav geformt. Auf diese Weise kann derselbe Sattelkörper sowohl bei Rundrohren als auch bei Vierkantrohren eingesetzt werden.

Gemäß einer Ausgestaltung der Erfindung besteht der Basiskörper aus einem stabilen Kunststoff. Dadurch wird das Gewicht reduziert. Außerdem ist Kunststoff korrosionsfest.

Alternativ kann der Basiskörper aus einem gebogenen Blechstreifen bestehen.

Gemäß einer Ausgestaltung der Erfindung besitzt der Blechstreifen etwa U-förmige Kröpfungen, abgestimmt auf die Maße der Schenkel und der zu haltenden Elemente.

Zur verbesserten Anpassung an Elemente unterschiedlicher Abmessungen können auch mehrere erste und/oder zweite Rastnasen vorgesehen sein.

Anhand der Zeichnung soll die Erfindung in Form von Ausführungsbeispielen näher erläutert werden. Es zeigen jeweils als Schnitt:
- Figur 1: eine erste Halterung als Schnitt,
- Figur 2: eine zweite Halterung mit eingesetztem Installationselement als Schnitt,
- Figur 3: eine dritte Halterung als Schnitt,
- Figur 4: eine vierte Halterung mit eingesetztem Installationselement als Schnitt,
- Figur 5: eine isometrische Ansicht eines Haltebügels im vergrößerten Maßstab und
- Figur 6: eine isometrische Ansicht eines Basiselements mit zwei unterschiedlichen Montagemöglichkeiten.

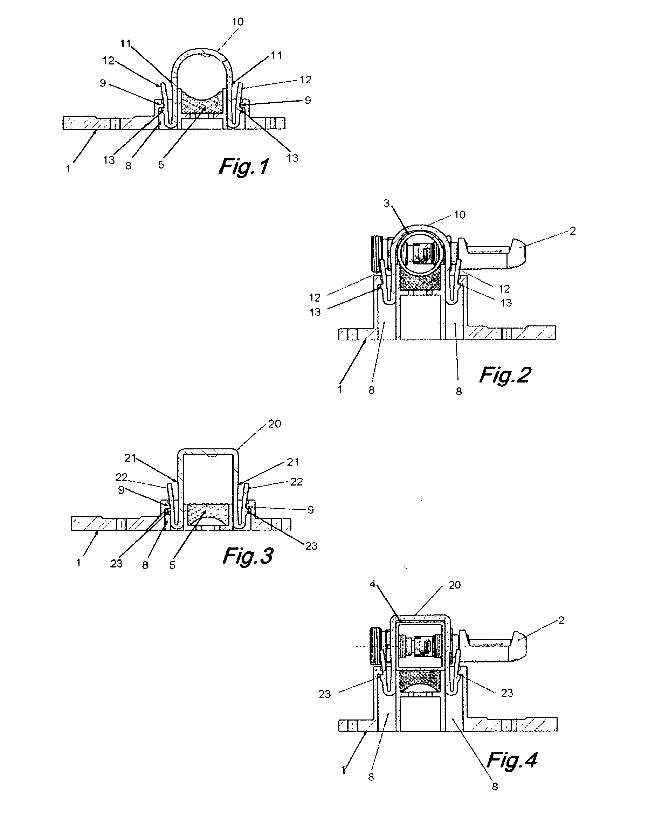

Fig. 1 zeigt einen Schnitt durch eine Halterung für Elemente der Wasser- oder Heizungsinstallation. Man erkennt einen Basiskörper 1. Dieser besteht aus einem stabilen Kunststoff und besitzt Befestigungsöffnungen für eine Wand-, Boden- oder Deckenmontage.

Des Weiteren erkennt man einen U-förmigen Haltebügel 10 mit zwei parallelen Schenkeln 11. Die Enden 12 der Schenkel 11 sind etwa V-förmig rückwärts gebogen und für eine Handbetätigung, z.B. mit Daumen und Zeigefinger, geformt.

Im Basiskörper 1 sind Öffnungen 8 vorgesehen, in die die Schenkel 11 und Schenkelenden 12 eingesteckt werden können. An der Außenseite der Schenkelenden 12 und an der damit kooperierenden Innenwand der Öffnungen 8 sind erste und zweite Rastnasen 13, 9 vorgesehen. Diese Rastnasen 13, 9 sorgen dafür, dass der Haltebügel 10 fest, aber lösbar am Basiskörper 1 fixiert werden kann.

Es versteht sich, dass auch mehrere erste oder zweite Rastnasen 13, 9 vorgesehen sein können, so dass der Haltebügel 10 mehr oder weniger tief in den Basiskörper eingeschoben werden kann.

Zwischen den Schenkeln 11 des Haltebügels 10 erkennt man schließlich noch einen Sattelkörper 5 aus einem elastischen, vorzugsweise schalldämpfenden Material, z.B. Gummi. Wie man sehen kann, ist die Oberseite des Sattelkörpers 5 konkav, seine Unterseite dagegen eben geformt.

Fig. 2 zeigt ebenfalls als Schnitt eine zweite Halterung, an der ein Rundrohr 3 mit Durchflussmesser 2 befestigt ist. Für einen ausreichenden Abstand zum Basiskörper 1 sind die Öffnungen 8 im Basiskörper 1 verlängert. Außerdem erkennt man, dass die Konkavseite des Sattelkörpers 5 auf das Rundrohr 3 abgestimmt ist.

Fig. 3 zeigt ebenfalls als Schnitt eine dritte Halterung, deren Haltebügel 20 zur Verwendung mit Rechteckrohren geformt ist. Passend zu den zu verwendenden Rechteckrohren ist der Sattelkörper 5 so positioniert, dass seine ebene Seite nach oben, seine konkave Seite dagegen nach unten zeigt.

Fig. 4 zeigt ebenfalls als Schnitt eine vierte Halterung. Man erkennt ein Rohr 4 mit quadratischem Querschnitt mit eingesetztem Durchflussmesser 2. Die Öffnungen 8 im Basiskörper 1 sind vergleichbar zur Fig. 2 verlängert, so dass zu dem Durchflussmesser 2 und der Unterlage des Basiskörpers 1 ein ausreichender Freiraum besteht.

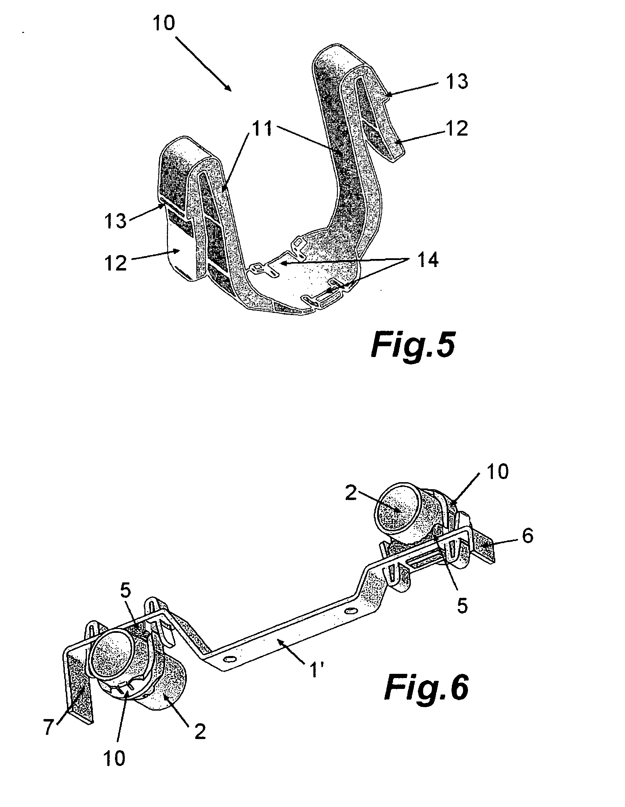

Fig. 5 zeigt in isometrischer Darstellung und in vergrößertem Maßstab einen Haltebügel 10. Man erkennt die V-förmig zurückgebogenen Schenkel 11, deren Enden 12 für eine Handbetätigung ausgebildet sind und an denen jeweils eine erste Rastnase 13 angeformt ist. Am U-Steg erkennt man noch federnde Lappen 14, die den klemmenden Halt der zu haltenden Elemente, z.B. Rohre, verbessern.

Fig. 6 zeigt ebenfalls in isometrischer Darstellung einen aus einem Blechstreifen gebogenen Basiskörper 1'. Dieser besitzt zwei U-förmige Kröpfungen 6, 7 unterschiedlicher Höhe. Die auf der rechten Seite dargestellte Kröpfung 6 ist auf die eingesteckten Enden des Haltebügels 10 abgestimmt. Die an der linken Seite dargestellte Kröpfung 7 dagegen ist weitaus höher, so dass das zu haltende Rohr 2 und der Haltebügel 10 von unten eingesteckt werden können. Durch eine solche hängende Montage gewinnt man Platz. Mit derartigen Basiselementen kann die Bautiefe der Wasser- oder Heizungsinstallation reduziert werden, ohne dass Stabilität und Montagefreundlichkeit darunter leiden.

## Patentansprüche

1. Halterung für Elemente (2, 3, 4) der Wasser- oder Heizungsinstallation, umfassend
- einen Basiskörper (1, 1'),
- und einen Haltebügel (10, 20), der eines der Elemente (3, 4) übergreift und am Basiskörper (1, 1') lösbar befestigt,
- Basiskörper (1, 1') und Haltebügel (10, 20) sind zu den Elementen (2, 3, 4) passend geformt,
**gekennzeichnet durch** die Merkmale:
- der Haltebügel (10, 20)
- ist U-förmig,
- besitzt zwei Schenkel (11,21)
- und besteht aus einem elastischen, schalldämpfenden Kunststoff,
- die Enden (12, 22) der Schenkel (11, 21) sind V-förmig rückwärts gebogen,
- an der Außenseite der Schenkelenden (12, 22) sind erste Rastnasen (13, 23) angeformt,
- der Basiskörper (1, 1') besitzt Öffnungen (8), passend zu den Schenkeln (11,12;21,22),
- an der Innenwand der Öffnungen (8) sind zweite Rastnasen (9) angeformt, die mit den ersten Rastnasen (13, 23) kooperieren,
- die Enden (12, 22) der Schenkel (11, 21) sind für Handbetätigung ausgebildet.

2. Halterung nach Anspruch 1, **gekennzeichnet durch das** Merkmal:
- der Basiskörper (1, 1') besitzt Befestigungsöffnungen.

3. Halterung nach Anspruch 1 oder 2, **gekennzeichnet durch das** Merkmal:
- zwischen dem Basiskörper (1, 1') und einem der Elemente (2, 3, 4) ist ein elastischer Sattelkörper (5) vorgesehen.

4. Halterung nach Anspruch 3, **gekennzeichnet durch das** Merkmal:
- der Sattelkörper (5) besteht aus einem Schall dämpfenden Material, z. B. Gummi.

5. Halterung nach Anspruch 3 oder 4, **gekennzeichnet durch das** Merkmal:
- die eine Seite des Sattelkörpers (5) ist eben, die andere Seite konkav geformt.

6. Halterung nach einem der Ansprüche 1 bis 5, **gekennzeichnet durch das** Merkmal:
- der Basiskörper (1) besteht aus einem stabilen Kunststoff.

7. Halterung nach einem der Ansprüche 1 bis 5, **gekennzeichnet durch das** Merkmal:
- der Basiskörper (1') besteht aus einem gebogenen Blechstreifen.

8. Halterung nach Anspruch 7, **gekennzeichnet durch das** Merkmal:
- der Blechstreifen besitzt etwa U-förmige Kröpfungen (6, 7), abgestimmt auf die Maße der Schenkel (11, 21) und der zu haltenden Elemente (2, 3, 4) der Wasser-oder Heizungsinstallation.

9. Halterung nach einem der Ansprüche 1 bis 8, **gekennzeichnet durch das** Merkmal:
- es sind mehrere erste und/oder zweite Rastnasen (13, 9) vorgesehen.
